(19) **Europäisches Patentamt**

**European Patent Office**

**Office européen des brevets**

(11) **EP 0 917 945 B1**

(12) **EUROPÄISCHE PATENTSCHRIFT**

(45) Veröffentlichungstag und Bekanntmachung des Hinweises auf die Patenterteilung:
**06.03.2002 Patentblatt 2002/10**

(51) Int Cl.$^7$: **B29C 43/24**, B29C 43/58, G01N 21/89

(21) Anmeldenummer: **98121645.0**

(22) Anmeldetag: **12.11.1998**

(54) **Verfahren zur kontinuierlichen Regelung des Schrumpfes einer amorphen Folie und eine Anordnung hierfür**

Method and device for continuous shrinkage control of an amorphous film

Procédé et dispositif pour le réglage en continu de la rétraction d'une feuille amorphe

(84) Benannte Vertragsstaaten:
**DE**

(30) Priorität: **21.11.1997 DE 19751817**

(43) Veröffentlichungstag der Anmeldung:
**26.05.1999 Patentblatt 1999/21**

(73) Patentinhaber: **Klöckner Pentaplast GmbH**
**56401 Montabaur (DE)**

(72) Erfinder:
- **Kohlert, Christian, Dr.**
  **56414 Oberahr (DE)**
- **Behrendt, Sven**
  **56410 Montabaur (DE)**
- **Gärtner, Heinz**
  **40822 Mettmann (DE)**
- **Diener, Lorenz, Dr.**
  **82449 Uffing (DE)**

(74) Vertreter: **Zounek, Nikolai, Dipl.-Ing. et al**
**Patentanwaltskanzlei Zounek, Industriepark Kalle Albert, Gebäude H391 Rheingaustrasse 190-196**
**65174 Wiesbaden (DE)**

(56) Entgegenhaltungen:
**US-A- 5 529 730**

- **TSENG A A ET AL: "IMTELLIGENT PROCESSING OF POLYMER SHEETS FOR CALENDERING" ADVANCES IN POLYMER TECHNOLOGY, Bd. 12, Nr. 4, 21. Dezember 1993 (1993-12-21), Seiten 361-378, XP000402918 ISSN: 0730-6679**
- **"TWIN SCANNER CONTROLS CAST FILM THICKNESS" PE PLAST EUROPE, Nr. 3/04, 1. Oktober 1993 (1993-10-01), Seite 221 XP000411647 ISSN: 0941-3596**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur kontinuierlichen Regelung des Schrumpfes einer amorphen Folie während des Abziehens von einem Kalander, wobei der Schrumpf über die Folienbreite und -länge anhand des Dichroismus oder der Doppelbrechung der Folie gemessen wird und eine Anordnung hierfür.

Eines der herkömmlichen Verfahren zum Verarbeiten von Kunststoffen zu Folien ist das Kalandrieren. Beim Kalandrieren durchläuft das Material nur einmal einen Walzenspalt und wird hierbei in eine spezielle geometrische Form gebracht, während beim Walzen das Material einen Walzenspalt mehrmals durchläuft. Hierzu wird zunächst eine kalandrierfähige Masse compoundiert und durch Mischen mit Zusätzen aufbereitet. Die fertigen Mischungen werden plastifiziert, aufgeschlossen, homogenisiert und auf den Kalander als Knet aufgebracht. Im Gegensatz zum Extrudieren oder Spritzgießen von thermoplastischen Kunststoffen finden dabei die Verfahrensstufen Gelieren, Homogenisieren und Formgebung nicht innerhalb einer Maschine, sondern nacheinander in gesonderten Aggregaten statt. Durch das Auswalzen des Knets zu einem sogenannten Folienfell wird dem Material eine vorläufige Form in bezug auf Dicke und Breite gegeben. Es folgt das Abnehmen bzw. der Abzug der Folie vom Kalander, wobei die Folie über Abzugswalzen geführt wird und anschließend das Abkühlen der heißen Folie, die über Kühlwalzen läuft und zuletzt das Aufwickeln längerer Folienbahnen oder das Ablängen und Stapeln von kurzen Folienstücken. Beim Abkühlen durchläuft die Folie den thermoplastischen Bereich, in dem Zugspannungen zu Orientierungen und eingefrorenen Spannungen innerhalb der Folie führen. Die aufgewickelten oder abgelängten Folien werden beim Kunden über thermische Verfahren weiterverarbeitet und müssen je nach der hierfür eingesetzten Tiefziehanlage und dem angewandten Tiefziehverfahren über bestimmte Schrumpfeigenschaften verfügen. Der Schrumpf stellt somit eine Qualitätseigenschaft von amorphen Folien dar, wobei die Einhaltung des Schrumpfes durch Messung erfaßt und durch Veränderung von Verfahrensparametern beim Abziehen der Folie von dem Kalander eingehalten werden muß.

Der Folienschrumpf beruht auf einer Molekülorientierung, die beim Kalandrieren auf die Deformation der Schmelze im Verfahrensablauf und auf die Scherung des plastomeren Kunststoffes zurückzuführen ist. Deformationen entstehen u.a.:

- durch die Plastifizierung des Rohmaterials im Kneter,
- aufgrund der Technologie des Breitfließens sowie der Scherung und Dehnung der Schmelze in den Walzenspalten,
- durch Verstrecken der Folie beim Umlenken um die Abzugswalzen,
- durch Verstrecken der Folie im Bereich der Luftstrecken zwischen den Temperwalzen.

Die Intensität der Orientierung ist abhängig vom Grad der Deformation, vom Temperaturablauf, von der Abkühlzeit bzw. dem Verlauf der Abkühlung und von diversen Werkstoffparametern. Als Reaktion auf die Einbringung von Orientierungen während der Herstellung schrumpfen die Folien, wenn sie beispielsweise beim Tiefziehen oder einer sonstigen späteren Verarbeitung erwärmt werden müssen. So werden beispielsweise Hart-PVC-Folien, die im allgemeinen keine Weichmacher enthalten, sondern nur Additive als Verarbeitungshilfsmittel, zu tiefgezogenen Becher, Dosen, Schalen, Blisterpackungen, Sortierböden für Obst, Pralinen, Konfekt oder technischen Kleinteilen verarbeitet. Weitere Anwendungen von Hart-PVC-Folien ergeben sich im Apparatebau und in der Automobilindustrie, im Bausektor und auf Spezialgebieten, wie beispielsweise die Herstellung von Identitätskarten, wie Kredit-, Ausweis-, Schlüssel-, Fernsprechkarten usw.

Als Schrumpf ganz allgemein wird die Dimensionsänderung, insbesondere die Längen- und Breitenänderung einer Folie infolge Wärmeeinwirkung bezeichnet. Bei der konventionellen Schrumpfmessung werden die Folien bei vorgegebener Temperatur in einem Umluftwärmeschrank oder in einem Flüssigkeitsbad gelagert; der nach bestimmter Zeit eingetretene Schrumpf wird bei Raumtemperatur gemessen. In der DIN-Norm 53377 ist die Bestimmung des Schrumpfes einer Folie in der Weise festgelegt, daß ein quadratisches Probenstück mit 100 mm Kantenlänge bei 140 °C in einem Ofen 10 min lang getempert wird. Anschließend wird die Probe nach dem Erkalten vermessen. Die Differenz zwischen dem Ausgangsmaß vor der Wärmebehandlung und dem Endmaß nach der Wärmebehandlung wird durch Längenmessung ermittelt und der Meßwert als Schrumpf S in % angegeben. Für diesen Schrumpf S gilt dann

$$S = \frac{dl}{l_0} = \frac{l_0 - l_1}{l_0}$$

Andere Lagerzeiten und Temperaturen bei der Messung des Folienschrumpfes sind eine Temperung bei einer Temperatur von 100 °C über 15 min und eine Wärmebehandlung über 5 min in Wasser bei einer Temperatur zwischen 70 und 95 °C. Bei dieser konventionellen Schrumpfmessung nach DIN können eine Anzahl von Fehlern auftreten, wie:

- Schwankungen in den Abmaßen der Proben durch den Stanzstempel, der zur Herstellung des quadratischen Probestückes verwendet wird,
- Verdrehung des Stanzstempels gegenüber der Längsrichtung der Folie,
- Temperaturschwankungen im Wärmeofen,

- Schwankungen der Temperzeit im Wärmeofen,
- Ungenauigkeiten bei der Ermittlung der geometrischen Abmaße.

Die genannten Fehler führen zu einer bis zu 36%igen Schwankung des ermittelten Schrumpfwertes. Diese erhebliche Ungenauigkeit stellt die konventionelle Schrumpfmessung in Frage, insbesondere führen schon geringe Abweichungen von der Temperaturvorgabe im Wärmeofen innerhalb des Intervalls von 120 °C bis 160 °C zu bedeutenden Schrumpfabweichungen. Ein weiterer Nachteil der konventionellen Schrumpfmessung besteht darin, daß die gegenseitige Beeinflussung von Längs-, Quer- und Dickenschrumpf nicht berücksichtigt werden kann. Die traditionelle Beschreibung des Schrumpfes geht von einer eindimensionalen Betrachtung der Längenänderung aus. Da es sich bei den Folien aber um dreidimensionale Gebilde handelt, muß die Änderung eines Abmaßes von den beiden anderen Abmaßen abhängen, sofern diese nicht vernachlässigbar klein sind. Im Falle einer Dicke der Folie im Bereich von 60 μm bis 1000 μm ist die Vernachlässigung des Dickenschrumpfes gegenüber dem Längs- und Querschrumpf sicherlich zulässig. Um eine eindeutige Aussage bezüglich Längs- und Querschrumpf machen zu können, ist es angebracht, für die Messung des Längsschrumpfes das Probenstück in Maschinenrichtung bzw. Laufrichtung der Folie und im Falle der Messung des Querschrumpfes quer zur Maschinenrichtung auszustanzen. Im ersteren Fall soll die Breite des Probenstückes klein gegenüber der Länge sein, im zweiten Fall soll umgekehrter Weise die Länge klein gegenüber der Breite sein.

Wie schon voranstehend angedeutet wurde, liegt die Ursache des Schrumpfes in der Dehnung der Folie oberhalb der Glastemperatur. Durch die Dehnung werden die Molekülketten orientiert und durch die dann folgende Abkühlung unterhalb der Glastemperatur eingefroren. Bei einer späteren Wiedererwärmung oberhalb der Glastemperatur werden die eingefrorenen Spannungen wieder frei und die Molekülketten nehmen ihre ursprünglich vorhandene Konfiguration wieder ein. Als Folge der dabei auftretenden Entropieänderung entstehen Rückstellkräfte (Schrumpfkräfte), die die anfängliche Deformation rückgängig machen. Es ist bekannt, daß sich durch die Orientierung der Molekülketten in einer amorphen Folie die Doppelbrechung und der Dichroismus der Folien verändern, so daß durch Messung des Dichroismus oder der Doppelbrechung die Orientierung der Molekülketten festgestellt werden kann und somit auch die Schrumpfeigenschaften bestimmbar sind.

Der Schrumpf wird beeinflußt durch

- die Temperatur- und Geschwindigkeitsführung der Folienbahn im Abzug nach dem Kalander,
- Zusätze und Additive, welche die Glastemperatur der Folie beeinflussen,

- Additive, die das Streckverhalten der Folie beeinflussen, sowie
- konstruktive Maßnahmen zur Relaxationsminderung.

Die Messung des Schrumpfes nutzt auf Anisotropie-Effekten beruhende optische Eigenschaften eines Polymers aus, nämlich den Dichroismus und die Doppelbrechung. Der Dichroismus, auch als richtungsabhängige Absorption polarisierten Lichtes bezeichnet, verkörpert das zweite Moment der Orientierungsverteilung von Molekülketten in einem Polymer. Dabei hängt die Intensität des absorbierten Lichtes von der Vektorrichtung des einfallenden Strahles zur Orientierungsrichtung ab, wobei das polarisierte Licht senkrecht und parallel zur Verstreckrichtung verschieden stark absorbiert wird.

Die Doppelbrechung beschreibt die Differenz der Brechungsindizes zweier senkrecht aufeinander stehender Hauptachsen und ebenso das zweite Moment der Orientierungsverteilung. Der in eine Probe einfallende Lichtstrahl wird aufgrund der optischen Anisotropie, das sind unterschiedliche Brechungsindizes, in zwei polarisierte, zueinander senkrechte Teilstrahlen mit unterschiedlichen Ausbreitungsgeschwindigkeiten aufgespalten. Nach dem Verlassen der Probe existiert ein Phasenunterschied zwischen den Teilstrahlen, der multipliziert mit der Wellenlänge des eingestrahlten Lichtes den Gangunterschied

$$\Gamma = \frac{\lambda \cdot \varphi}{2\pi} = d \, (n_{\text{parallel}} - n_{\text{senkrecht}})$$

ergibt, mit der Dicke d der Probe. Die Doppelbrechung selbst ergibt sich aus $\Gamma/d = n_{\text{parallel}} - n_{\text{senkrecht}}$.

Die Verstreckung der Moleküle entspricht dem Schrumpfungsvermögen des Polymers bzw. der Folie. Mit dem Grad der Verstreckung ändert sich das Transmissionsverhalten eines die Folie durchstrahlenden Lichtes. Die Transmission des Lichtes ist bei Drehung einer Folie, die sich zwischen einem Polarisator und einem Analysator befindet, vom Verdrehwinkel der Folie abhängig. Dabei stehen die Polarisationsrichtungen der Polarisationsfilter, d.h. von Polarisator und Analysator, senkrecht aufeinander. Zur Verbesserung der Intensität des die Folie durchstrahlenden Lichtes in einer bestimmten Stellung von Polarisator und Analysator zueinander kann die Orientierung von Molekülketten in der Folie wie folgt bestimmt werden. Die Folie wird in Maschinenrichtung parallel zur Durchlassrichtung von Polarisator oder Analysator gehalten und anschließend gedreht, bis sich am Detektor ein Maximalwert einstellt. Der Drehwinkel der Folie ist dann gleich η, der Winkel ε, den die Molekülketten mit der Maschinenrichtung bilden, ergibt sich dann zu

$$\varepsilon = 45° - \eta$$

Sind die Moleküle in Maschinenrichtung orientiert, so ist ε = 0, da dann das erste Maximum der Intensitätsänderung bei η = 45° liegt.

In der DE-C-24 30 521 sind ein Verfahren und eine Vorrichtung beschrieben, mit denen der Polarisationszustand einer Strahlung, d.h. deren Elliptizität und Polarisationsrichtung, mittels eines rotierenden Analysators bestimmt werden können, wobei die Intensität der durchgelassenen Strahlung in Abhängigkeit von dem Drehwinkel des Analysators aufgetragen wird. Eine Fourieranalyse erlaubt die Bestimmung der Elliptizitätsparameter. Es sind auch Anordnungen ohne bewegliche Elemente bekannt, die mit mehreren feststehenden Detektoren arbeiten. Hierbei erfolgt eine Aufspaltung des zu analysierenden Hauptstrahls in mehrere Teilstrahlen bzw. die Anordnung von mehreren Detektoren innerhalb eines Hauptstrahls. In der DE-A-32 12 809 wird mittels eines Gitters der Hauptstrahl eines Laserpulses über die Beugung in höhere Ordnungen in zwei Teilstrahlen aufgespalten. Dadurch wird die gleichzeitige Messung von zwei zueinander senkrecht stehenden Polarisationsrichtungen ermöglicht, jedoch reicht diese Messung zur allgemeinen Charakterisierung des Polarisationszustandes des Laserpulses nicht aus. In der DE-A-19 51 920 ist eine Anordnung mit vier festen Detektoren und einer Strahlaufspaltung mit Hilfe eines Kegels beschrieben. Die Justierung der vier unabhängigen Strahlen ist jedoch sehr aufwendig und störanfällig.

Ähnliches gilt für die in der DE-A-39 31 540 beschriebenen Analysatoreinrichtung, bei der eine Aufspaltung in sechs Teilstrahlen erfolgt. Für die Charakterisierung der Elliptizität werden vier Teilstrahlen herangezogen. Das hier verwendete strahlaufteilende Polarimeter ist auf eine Aufspaltung in wenige Teilstrahlen beschränkt, um den technischen Aufwand in Grenzen zu halten. Die Genauigkeit von rotierenden Analysatoren kann mit derartigen Polarimetern nicht erreicht werden. In der US-A-4 158 506 und in der EP-A-0 632 256 sind Anordnungen beschrieben, bei denen mehrere Detektoren innerhalb des Hauptstrahl plaziert sind. Die Leistungsdichte und damit die Meßempfindlichkeit nimmt durch die Aufweitung entsprechend stark ab.

Für die On-Line-Überwachung der Doppelbrechung von Folien, Filmen und Platten sind aus der DE-A-19 537 706 eine rotationsfreie Anordnung und ein Analyseverfahren bekannt, bei dem der zu analysierende Hauptstrahl mit Hilfe einer zweidimensionalen Beugungsstruktur in eine Anzahl von Teilstrahlen gleichen Strahlprofils und gleicher Intensität aufgeteilt wird, wobei die Teilstrahlen linear polarisationsempfindliche Elemente durchlaufen und auf eine entsprechende Anzahl von Detektoren auftreffen, deren Signale bezüglich der Richtungen fourier-analysiert werden.

Aufgabe der Erfindung ist es ein Verfahren zur kontinuierlichen Regelung des Schrumpfes einer Folie während des Abziehens von einem Kalander zu schaffen, bei dem der Schrumpf kontinuierlich gemessen und die gegenseitige Beeinflussung bzw. Korrelation von Längs- und Querschrumpf berücksichtigt und darüber hinaus der Schrumpf innerhalb vorgegebener Schrumpfgrenzen gesteuert wird. Im Rahmen dieser Aufgabe soll auch eine kontinuierliche Schrumpfmessung der Folien anhand des Dichroismus bzw. der Doppelbrechung über die Breite der Folienbahn erfolgen.

Diese Aufgabe wird verfahrensgemäß in der Weise gelöst, daß laufend der Schrumpf in der Mitte und am Rand der Folie gemessen wird, daß aus einem gemittelten Schrumpf für die Mitte und den Rand aus einer Anzahl von gemessenen Schrumpfwerten ein Schrumpfunterschied Δ S gebildet wird und daß bei einer Abweichung größer als ± 0,5 % des Schrumpfunterschieds von einem vorgegebenen Schrumpfunterschied zumindest einer der Parameter wie die Friktion und die Umlaufgeschwindigkeit zwischen der letzten Kalanderwalze und der ersten Abzugswalze, die Temperatur und Umlaufgeschwindigkeit der Kalander- und Abzugswalzen so geändert wird, daß der Schrumpfunterschied Δ S innerhalb des Bereiches aus vorgegebenem Schrumpfunterschied ± 0,5 % Abweichung gehalten wird.

In Weiterführung des erfindungsgemäßen Verfahrens werden die Zeit bis zum Erreichen der Glaspunkttemperatur in der Mitte und am Rande der vom Kalander abgezogenen Folie sowie die Folienbreiten auf der letzten Kalanderwalze und der ersten Abzugswalze gemessen und wird ein Schrumpfunterschied Δ S zwischen der Mitte und dem Rand der Folie gemäß der Näherungsformel

$$\Lambda\ S = \frac{t_{GM} - t_{GR}}{t_{GR}} + \frac{b_{LKW} - b_{EAW}}{b_{EAW}}$$

$$= t_{GM} / t_{GR} + b_{LKW} / b_{EAW} - 2$$

bestimmt, mit den Zeiten $t_{GM}$, $t_{GR}$ zum Erreichen der Glaspunkttemperatur in der Folienmitte und am -rand und den Folienbreiten $b_{LKW}$, $b_{EAW}$ auf der letzen Kalanderwalze und der ersten Abzugswalze und wird dieser Schrumpfunterschied Δ S minimiert.

In Ausgestaltung des Verfahrens wird die Temperatur der Folienoberfläche in der Mitte und am Rand auf den Abzugswalzen mittels einer Infrarotkamera gemessen. Des weiteren wird die Folienbreite auf der letzten Kalanderwalze und der ersten Abzugswalze mit Hilfe einer CCD-Einrichtung gemessen.

In Ausgestaltung des Verfahrens wird zur Schrumpfmessung die Folie mit linear polarisiertem Laserlicht im Wellenlängenbereich von 400 bis 900 nm, insbesondere 670 nm, durchstrahlt, ist die Orientierung der Polarisationsebene des Laserlichtes gegenüber der Folienlängsrichtung geneigt, wodurch das linear polarisierte Laserlicht beim Durchstrahlen der Folie teilweise zirkular polarisiert und mittels einer Optik in einem linear polarisierten Hauptstrahl zurückgebildet wird, den ein nachgeschaltetes Beugungselement in bis zu n Teilstrahlen aufteilt, von denen jeder auf ein Fotoelement, ausgerüstet mit einem Polarisationsfilter, eines Detektorringes gelenkt wird.

Die Weiterführung des Verfahrens ergibt sich aus den Merkmalen der Patentansprüche 6 bis 15.

Es soll auch die Aufgabe der Erfindung gelöst werden, eine Anordnung zur kontinuierlichen Regelung des Schrumpfes einer amorphen Folie während des Abziehens von einem Kalander zu schaffen, die eine schnelle Erfassung und Steuerung des Schrumpfes über den Dichroismus und/oder die Doppelbrechung der Folie ermöglicht und weitgehend justierfreundlich und störunempfindlich arbeitet.

Zur Lösung dieser Aufgabe ist eine Anordnung vorgesehen, die sich dadurch auszeichnet, daß ein Schrumpfmeßgerät Meßdaten über den Schrumpf der Folie an einen angeschlossenen Meßdaten-Rechner liefert, der einerseits über eine Schnittstelle mit einem Leitrechner und andererseits mit einer Bildschirm-Anzeige verbunden ist, daß in dem Leitrechner charakteristische Eichkurvenparameter von verschiedenen Folientypen und Schrumpfabweichungen bzw. Schrumpfgrenzen gespeichert sind, die auf Abfrage in den Meßdaten-Rechner eingespeist werden, der aus dem berechneten Schrumpfunterschied und dem gemessenen Schrumpfunterschied zwischen der Folienmitte und dem Folienrand die Abweichung des Schrumpfunterschiedes $\Delta$ S bestimmt und an den Leitrechner weiterleitet, und daß der Leitrechner mit Steuergliedern für die Friktion und die Umlaufgeschwindigkeit zwischen letzter Kalanderwalze und erster Abzugswalze, für die Temperaturführung bzw. Kühlung der Abzugs- und Kühlwalzen, für die Umlaufgeschwindigkeit der Abzugswalzen und für die Temperaturführung der letzten Kalanderwalze verbunden ist, und die Steuerglieder einzeln, zu zweit, zu mehreren oder alle zugleich mit Steuersignalen beaufschlagt. Die weitere Ausgestaltung der Anordnung ergibt sich aus den Merkmalen der Ansprüche 17 bis 28.

Mit der Erfindung werden die Vorteile einer raschen Erfassung der Orientierung der Molekülketten in Folien erzielt, wodurch eine schnelle Schrumpfmessung und regelung möglich werden, die zu einer hohen Zeit- und Materialeinsparung führen, da während des Herstellungsvorganges für die Folien schon regelnd eingegriffen wird und daher der Ausschuß an Folienmaterial sehr gering gehalten werden kann.

Die Erfindung wird im folgenden anhand der Zeichnungen näher erläutert. Es zeigen:

Fig. 1      eine Korrelation der Meßwertamplitude, die ein Maß der Molekülketten-Orientierung in einer kalandrierten Folie wiedergibt, zum Längs- und Querschrumpf der Folie,

Fig. 2      schematisch Abzugs- und Kühlwalzen, die einem Kalander nachgeschaltet sind,

Fig. 3      eine schematische Ansicht einer ersten Ausführungsform eines Schrumpfmeßgerätes mit drehbarem Meßkopf,

Fig. 4      im Schnitt ein Zylinderrohr für die Aufnahme einer Lichtquelle oder eines Empfängers des Schrumpfmeßgerätes nach Fig. 3,

Fig. 5      im Detail eine Antriebsachse für das Schrumpfmeßgerät nach Fig. 3,

Fig. 6      eine schematische Ansicht einer zweiten Ausführungsform eines Schrumpfmeßgerätes,

Fig. 7      schematisch ein optisches System und einen Empfänger der zweiten Ausführungsform des Schrumpfmeßgerätes nach Fig. 6,

Fig. 8      in einem Schaltbild die Anbindung eines Schrumpfmeßgerätes an einen Meßdaten-Rechner und einen Leitrechner,

Fig. 9      ein Diagramm für einen Regelkreis zur Minimierung des Schrumpfunterschieds,

Fig. 10      ein Diagramm einer Anordnung zur Steuerung von Regelgliedern verschiedener Aggregate des Kalanders und des Abzugs des Kalanders.

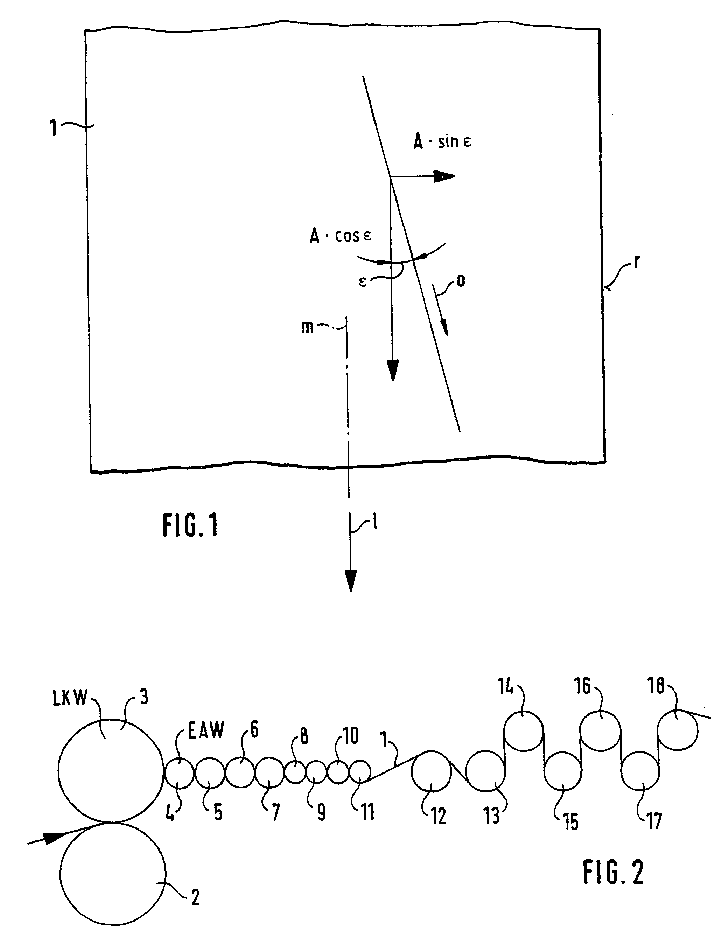

Anhand von Fig. 1 wird die Korrelation einer Meßwertamplitude zum Längs- und Querschrumpf einer kalandrierten Folie 1 beschrieben. Die Amplitude A ist ein Vektor der den Grad der Verstrecktheit der Moleküle bzw. Molekülketten anzeigt, die in Richtung o orientiert sind. Die Orientierungsrichtung o der Molekülketten schließt mit der Laufrichtung I der Folie bzw. mit der Maschinenrichtung einen Winkel $\epsilon$ ein. Der Längsschrumpf ergibt sich somit gemäß dem Ausdruck A•cos $\epsilon$ und der Querschrumpf wird durch den Ausdruck A•sin$\epsilon$ beschrieben. Insofern sind Längs- und Querschrumpf über den Winkel $\epsilon$ miteinander korreliert. Mit r ist der Folienrand bezeichnet und mit m die Folienmitte. Wird ein Schrumpfmeßgerät zur Bestimmung des Folienschrumpfes über die Folienbreite traversiert, wobei die Folie sich gleichzeitig in Richtung I bewegt, so werden sowohl der Längs- als auch der Querschrumpf gemessen. Bei der Schrumpfmessung zeigt sich im allgemeinen, daß eine Schrumpfdifferenz zwischen der Folienmitte m und dem Folienrand r im Bereich von 0,5 % bis 2,5 % auftritt, wobei diese Schrumpfdifferenz kalanderspezifisch ist, d.h. davon abhängt, ob die ersten Abzugswalzen bei einer Temperatur von 35 bis 55 °C, d. h. "kalt" gefahren werden oder die ersten Abzugswalzen auf 80 bis 85 C erwärmt sind, sozusagen mit "heißen" Abzugswalzen produziert wird. Es zeigt sich dabei, daß das Schrumpfprofil über der Folienbreite durch die Temperaturen der ersten Abzugswalzen beeinflußt wird und bei sogenannten "heißen" Abzugswalzen die Schrumpfdifferenz geringer als bei "kalten" Abzugswalzen ist.

Das Temperaturprofil über die Folienbreite, gemessen auf den Abzugswalzen, zeigt eine ähnliche Form wie das Schrumpfprofil über die Folienbreite. Dabei führt eine niedrigere Folienrandtemperatur im Vergleich zu der Temperatur in der Folienmitte zu einem größeren Längsschrumpfbetrag und eine höhere Temperatur in der Folienmitte zu einem geringeren Schrumpfbetrag. Untersuchungen mittels einer gezielten Temperierung von bestimmten Bereichen über die Folienbreite haben gezeigt, daß der Schrumpfwert in diesen Bereichen beeinflußt werden kann. So kann eine Änderung des Schrumpfes durch Anblasen des Folienfells im Abzug in der Folienmitte, in einem Bereich zwischen der Folienmitte und dem Folienrand und am Folienrand mit Kalt- bzw. Warmluft den Längsschrumpf der Folie steuern. Dabei zeigt sich, daß ein Anblasen des Folienfells auf den Abzugswalzen an bestimmten Stellen zu einer Zunahme des Betrages des Längsschrumpfes bei Kaltluft führt. Der Einsatz von Warmluft am Folienrand kann den Schrumpf durch eine verlängerte Relaxationszeit auf das Maß des Schrumpfes in der Folienmitte reduzieren. Zusammenfassend ist festzustellen, daß das Temperaturprofil der Folie über der Breite einen erheblichen Einfluß auf das Schrumpfprofil hat. Dabei führen kältere Bereiche zu einem höheren Betrag des Längsschrumpfes und wärme Bereiche zu einem geringeren Betrag des Längsschrumpfes. Um ein möglichst einheitliches Schrumpfprofil über der Folienbreite zu erzielen, d.h. um die Schrumpfdifferenzen zwischen Folienrand und Folienmitte zu minimieren, muß eine möglichst einheitliche Temperatur über die Folienbreite gewährleistet sein. Dieses einheitliche Temperaturprofil über die Folienbreite kann zum einen durch Anblasen der wärmeren Folienmitte durch Kaltluft oder alternativ durch Anblasen der kälteren Folienränder mit Heißluft realisiert werden.

In Fig. 2 ist schematisch der Abzug eines nicht gezeigten Kalanders dargestellt, der eine erste Gruppe von Abzugswalzen 4 bis 7, eine zweite Gruppe von Abzugswalzen 8 bis 11 sowie eine Gruppe von Kühlwalzen 12 bis 18 umfaßt. Die erste Gruppe der Abzugswalzen 4 bis 7 weist beispielsweise einen größeren Durchmesser als die zweite Gruppe von Abzugswalzen 8 bis 11 auf. Die erste Abzugswalze (EAW) 4 kontaktiert die letzte Kalanderwalze (LKW) 3, die wiederum in Kontakt mit einer weiteren Kalanderwalze 2 steht. Bei diesen Kalanderwalzen kann es sich beispielsweise um die beiden letzten Kalanderwalzen eines Vier-Walzen-L-Kalanders handeln. Der Verlauf der Folie 1 zwischen den beiden Kalanderwalzen 2 und 3, den Abzugswalzen 4 bis 11 und den Kühlwalzen 12 bis 18 ist in Fig. 2 schematisch dargestellt. In der Praxis werden die Temperaturprofile auf den Abzugswalzen mit Hilfe einer Infrarotkamera gemessen. Da aus technischen Gründen nur jeweils die Abzugswalzen 5, 7, 9 und 11 vermessen werden konnten, die zwischen der Walzenmitte und dem Walzenrand Temperaturdifferenzen von 7°C, 5°C, 4°C und 3°C aufwiesen, wurde für die davor gelagerten Abzugswalzen 4, 6, 8 und 10 jeweils die gleiche Temperaturdifferenz wie für die jeweils nachfolgende Abzugswalze angenommen. Aus den gemessenen Temperaturprofilen der einzelnen Abzugswalzen sind der jeweilige Temperaturverlauf in Abhängigkeit von der Zeit in der Mitte der Abzugswalze bestimmbar und somit der Verlauf der Abkühlkurven meßbar. Die Abkühlkurven können des weiteren theoretisch anhand eines Modells berechnet werden, auf das hier nicht näher eingegangen wird. Dabei zeigen die theoretisch berechneten Abkühlkurven gute Übereinstimmung mit den gemessenen Abkühlkurven, so daß das Modell für Simulationsrechnungen zur Vorausberechnung der Auswirkungen von Temperaturschwankungen über die Folienbreite sowie zur Bestimmung des Einflusses unterschiedlicher Walzengeschwindigkeiten auf die Vergleichmäßigung der Folieneigenschaften anwendbar ist. Bei diesen Berechnungen zeigt es sich, daß der Temperaturverlauf derart ist, daß der Übergang unter die Glastemperatur von etwa 80 °C bei einer PVC-Folie in der Folienmitte später als am Folienrand, bezogen auf den Austritt der Folie aus dem letzten Kalanderspalt, realisiert wird. Hand in Hand damit ergibt sich dann ein Schrumpfunterschied des Längsschrumpfes in Folienmitte und am Folienrand. Dieser Schrumpfunterschied kann mathematisch durch folgende Näherungsformel beschrieben werden:

$$\Delta S = \frac{t_{GM} - t_{GR}}{t_{GR}} + \frac{b_{LKW} - b_{EAW}}{b_{EAW}}$$

mit den Zeiten $t_{GM}$, $t_{GR}$ zum Erreichen der Glaspunkttemperatur in der Folienmitte und am Folienrand und den Folienbreiten $b_{LKW}$, $b_{EAW}$ auf der letzten Kalanderwalze 3 und

$$= t_{GM} / t_{GR} + b_{LKW} / b_{EAW} - 2$$

der ersten Abzugswalze 4.

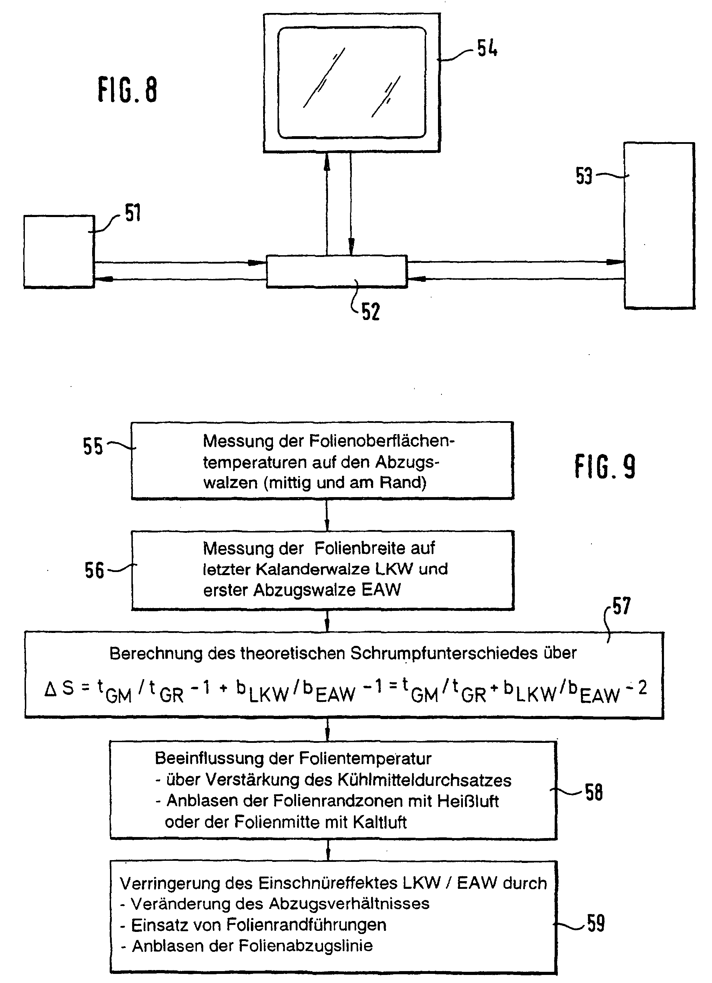

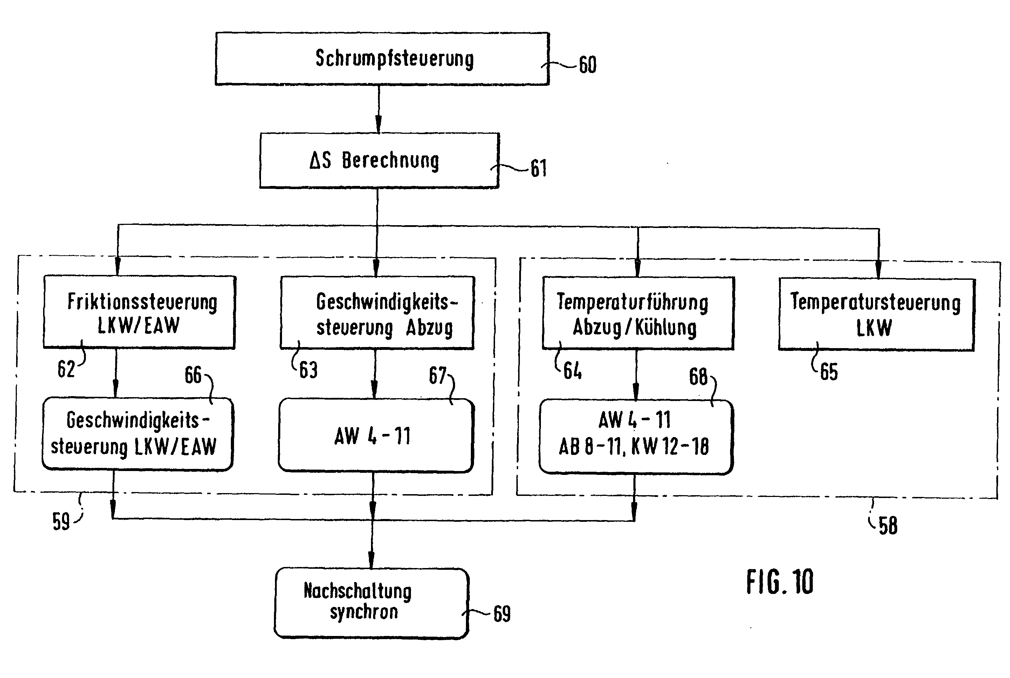

Anhand dieser Näherungsformel kann durch entsprechende Steuerung verschiedener Parameter im Abzug des Kalanders der Schrumpfunterschied $\Delta S$ minimiert und der Kalandrierprozeß automatisiert werden, wie später noch anhand der Figuren 9 und 10 erläutert werden wird.

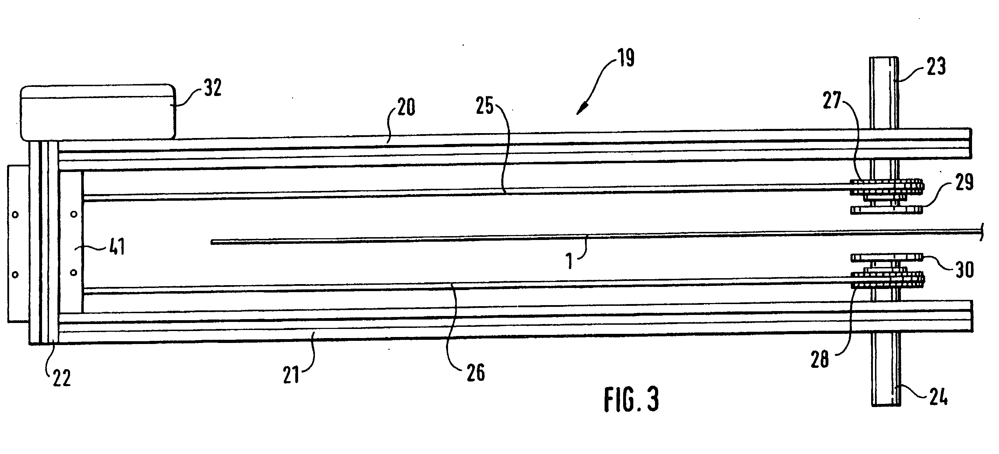

Anhand von Fig. 3 wird eine erste Ausführungsform 19 eines Schrumpfmeßgerätes beschrieben. Das Schrumpfmeßgerät weist einen Rahmen aus einem U-Profil 20,21,22 auf, bei dem es sich um ein Metallprofil, insbesondere aus Aluminium handelt. Ein Meßkopf besteht aus einer Lichtquelle 73, bei der es sich um einen Laser handelt, und einem Empfänger 74. Der Meßkopf in seiner Gesamtheit ist entlang den Schenkeln 20,21 der U-Profils verschiebbar, wobei die Längen der Schenkeln so gewählt sind, daß sich der Meßkopf bis in die Bahnmitte der Folie 1 verschieben läßt, die zwischen den beiden Schenkeln sowie zwischen der Lichtquelle 73 und dem Empfänger 74 hindurchläuft. Die Verschiebung des Meßkopfes bis in die Mitte der Folie 1 reicht aus, da der Schrumpfverlauf in bezug auf die Kalanderachse bzw. auf die Maschinenrichtung bzw. Folienlaufrichtung symmetrisch ist. Die Lichtquelle 73 und der Empfänger 74 ist jeder für sich in einem Zylinderrohr 23 bzw. 24 eingebaut, die senkrecht auf die Schenkel 20 bzw. 21 des U-Profils ausgerichtet sind. Die beiden Zylinderrohre 23,24 sind sich gegenüberliegend montiert und um die optische Achse zwischen Lichtquelle und Empfänger justiert. Jedes Zylinderrohr 23,24 ist außenseitig mit einer Zahnscheibe 27 bzw. 28 verbunden, über die ein Endlos-Zahnflachriemen 25 bzw. 26 geführt ist, der am anderen Ende des U-Profils über eine weitere Zahnscheibe 35 bzw. 36 umläuft, die auf einer Achse 34 aufsitzt, die ein Motor 32 antreibt, der an der Außenseite des Schenkels 20 befestigt ist. Stirnseitig ist an jedem Zylinderrohr 23,24 zur Folie 1 hin ein Drehteil 29 bzw. 30 angesetzt.

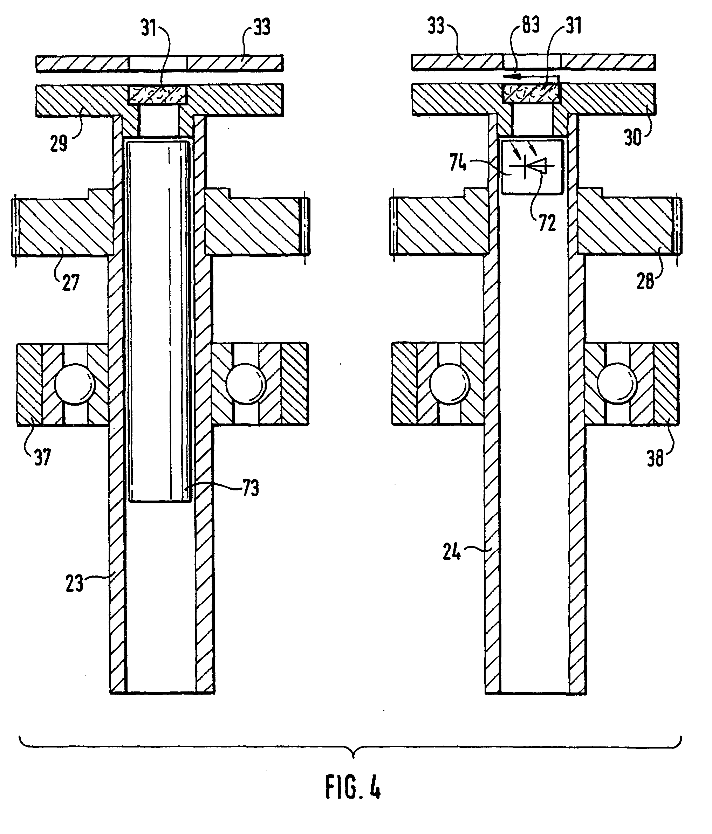

Fig. 4 zeigt je einen Schnitt durch die Zylinderrohre 23 und 24, wozu anzumerken ist, daß die Zylinderrohre identisch ausgebildet sind. Insofern gelten alle Ausführungen zu dem Zylinderrohr 23 in analoger Weise auch für das Zylinderrohr 24. Das Zylinderrohr 23 ist in einem Stehlagergehäuse 37 gelagert und an seiner Außenseite trägt es die Zahnscheibe 27. Das Zylinderrohr 23 umschließt weitgehend die Lichtquelle 73, die ein Laser ist, der Licht im Wellenlängenbereich von ca. 400 bis 900 nm, insbesondere im roten Wellenlängenbereich von 670 nm abstrahlt. In dem Drehteil 29, der in das Zylinderrohr 23 eingeschoben ist, befindet sich ein Polarisationsfilter 31, das als Polarisator für das monochromatisch polarisierte Licht des Lasers wirkt. Die Polarisationsrichtung des Polarisationsfilters 31 kann durch Verdrehen des Drehteils 21 nach Bedarf geändert werden. Eine Abdeckplatte 33 schließt den Drehteil 29 ab. In dem Zylinderrohr 24 befindet sich anstelle der Lichtquelle der Empfänger 74, der ein Fotoelement 72 umfaßt, beispielsweise ein Silizium-Fotoelement, das abhängig von der auftreffenden Lichtintensität einen Strom bestimmter Amplitude liefert. Dieser Strom wird von einem nicht gezeigten Impedanzwandler in eine Spannung umgewandelt, durch einen Meßverstärker verstärkt und über eine serielle Schnittstelle in einen Rechner eingelesen. In dem Zylinderrohr 24 bildet das Polarisationsfilter 31 den Analysator für das die Folie durchstrahlende Licht. Das Fotoelement 72 hat beispielsweise einen Empfindlichkeitsbereich von 400 nm bis 1100 nm und befindet sich in einem Kunststoffgehäuse, das in dem Zylinderrohr 24 positioniert ist. Das Polarisationsfilter 31 bzw. der Analysator, der oberhalb des Empfängers 74 angeordnet ist, befindet sich gleichfalls in einem Gehäuse, an dem zusätzlich eine Winkelskalierung 83 angebracht ist, die es ermöglicht, den jeweiligen Drehwinkel des Analysators gegenüber dem Hauptstrahl des Lasers zu bestimmen und somit die Lichtintensität in Abhängigkeit vom Drehwinkel am Empfänger 74 festzustellen.

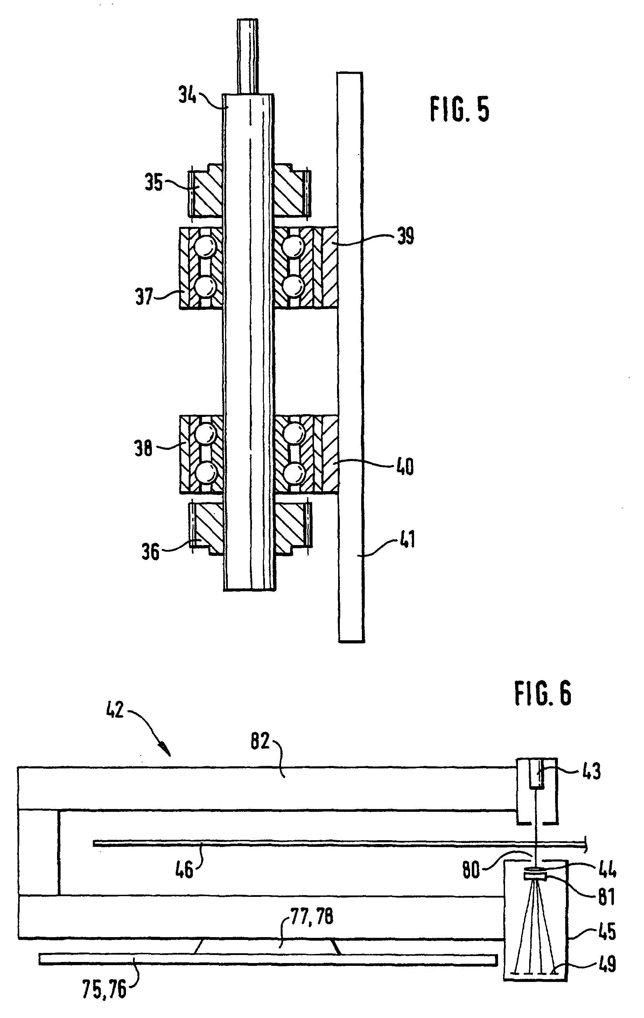

Fig. 5 zeigt in einer Draufsicht die Achse 34, auf der die beiden Zahnscheiben 35 und 36 aufsitzen, die einen kleineren Zahnscheibendurchmesser besitzen als die Zahnscheiben 27,28 auf den Zylinderrohren 23,24. Die Achse 34, die von dem Motor 32 (s. Fig. 3) angetrieben ist, ist in Stehlagergehäusen 37,38 gelagert. Diese Stehlagergehäuse 37,38 sind über Distanzteile 39,40 an einer Grundplatte 41 befestigt, die mit dem Metallprofil 22 (s. Fig. 3) verbunden ist. Durch die Motor angetriebene Achse 34 werden die Endlos-Zahnflachriemen 25,26 in Umlauf gesetzt und synchron die Zylinderrohre 23,24 und somit die Lichtquelle 73 und der Empfänger 74 gedreht. Der Drehsinn des Motors 32, der ein Elektromotor ist, ist umkehrbar, was erforderlich ist, da die Stromkabel nur eine begrenzte Anzahl von Drehungen in eine Richtung zulassen. Für die Traversierung, d.h. die Querbewegung zu der Maschinenrichtung sind zwei an der Kalanderlinie angebrachte Linearführungen vorgesehen.

Fig. 6 zeigt schematisch eine zweite Ausführungsform 42 des Schrumpfmeßgerätes, das aus einem Laser als Lichtquelle 43 und einem Empfänger 45 besteht, der ein optisches System 44, ein Beugungselement 81 und einen Detektorring 49 umfaßt. Der Aufbau dieser zweiten Ausführungsform des Schrumpfmeßgerätes ist ähnlich dem Aufbau der ersten Ausführungsform und hat einen Rahmen aus einem U-Profil 82, wobei der Laser 43 an dem einen Schenkel und der Empfänger 45 an dem anderen Schenkel des U-Profils 82 befestigt ist. Eine Folie 46 durchläuft senkrecht zur Zeichenebene das U-Profil 82 und wird von dem Strahl des Lasers 43 durchstrahlt. Der Laser 43 mit einer Leistung von ca. 3 mW strahlt polarisiertes Licht im roten Wellenlängenbereich ab. Die Orientierung der Polarisationsebene des Laserlichtes ist beispielsweise um 45° gegenüber der Maschinenrichtung geneigt. Beim Durchstrahlen der Folie 46 wird dieses linear polarisierte Licht zu einem gewissen Teil zirkular polarisiert. Die Zirkularität wird durch die unterschiedlichen doppelbrechungsbedingten Transmissionsphasen der alle in orthogonalen Orientierungsrichtung der Folie 46 gerichteten Energievektoren hervorgerufen. Der Grad der Zirkularität hängt von der Verstrecktheit der Molekülketten ab. Die Energievektoren beschreiben eine Ellipse, deren große Halbachse ebenfalls um 45° gegenüber der Maschinenrichtung geneigt ist.

Mittels des optischen System 44 wird das transmittierte zirkulare Licht in linear polarisiertes Licht zurückgebildet. In Fig. 6 sind schematisch zwei zueinander parallele, in Blockrichtung hintereinander angeordnete Linearführungen 75,76 angedeutet. Die Linearführungen sind nahe der Kalanderlinie quer zur Laufrichtung der Folie 1 angebracht. Die Linearführungen sind mit zwei Führungsschlitten 77,78 ausgestattet, auf denen die jeweilige Ausführungsform 42 bzw. 19 des Schrumpfmeßgerätes befestigt ist. Die Führungsschlitten 77,78 sind motorisch angetrieben.

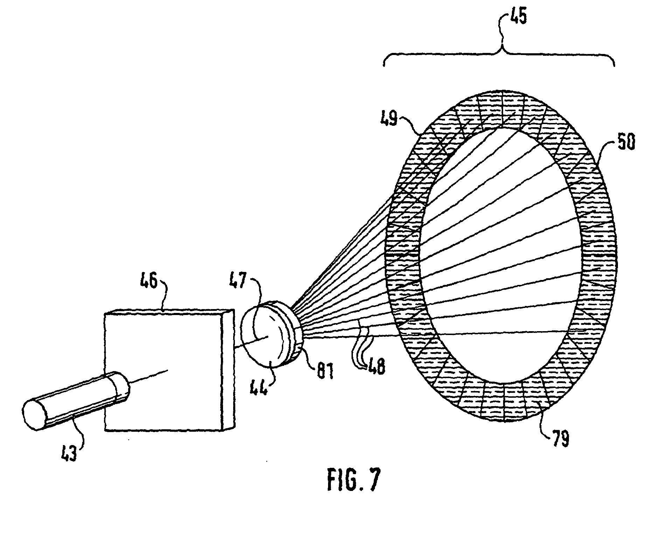

In Fig. 7 ist schematisch der Meßkopf aus Laser 43, optischem System 44, einem Beugungselement 81 und dem Detektorring 49 des Empfängers 45 dargestellt. Der Detektorring 49 besteht aus einer Anzahl n von Fotoelementen 50. Das dem optischen System 44 nachgeschaltete Beugungselement 81 teilt den Hauptstrahl 47 des durch die Folie 46 hindurchgetretenen Lichtes in n Teilstrahlen auf, die jeweils auf ein Fotoelement 50 auftreffen. Auf jedem Fotoelement 50 ist ein Polarisationsfilter 79 angeordnet. Die Anzahl n der Fotoelemente 50 liegt im Bereich von 18 bis 72 und insbesondere ist n = 36. Die Polarisationsrichtung von einem Polarisationsfilter 79 zu dem benachbarten Polarisationsfilter 79 ist jeweils um einen Winkel der Größenordnung 360°/n in Radialrichtung des Detektorringes 49 um die optische Achse des Hauptstrahls 47 der Lichtquelle 43 gedreht. Ist beispielsweise n = 36, so sind die Polarisationsfilter 79 in ihrer Polarisationsrichtung jeweils um 10° gedreht. Dieser Aufbau erlaubt es demnach, die Messung des transmittierten Lichtes über den vollen Winkel von 360° vorzunehmen, ohne daß ein rotierender Analysator als Polarisationsfilter vorgesehen werden muß. Insofern arbeitet die gesamte Meßanordnung des Schrumpfmeßgerätes gemäß der zweiten Ausführungsform 42 ohne einen rotierenden Analysator, wobei jedoch die Strahlintensität der einzelnen Teilstrahlen gleich groß ist, so daß es zu keinen Intensitätsunterschieden zwischen den Teilstrahlen kommt. Wie aus Fig. 6 ersichtlich ist, befindet sich das optische System 44 zwischen einer Eintrittsöffnung 80 in das Empfängergehäuse und dem Detektorring 49.

Fig. 8 zeigt in einem Schaltbild die Anbindung des Schrumpfmeßgeräts 51 an einen Meßdaten-Rechner 52 und an einen Leitrechner 53. Das Schrumpfmeßgerät 51, das entweder in der ersten Ausführungsform 19 oder in der zweiten Ausführungsform 42 vorliegt, liefert Meßdaten über den Schrumpf der Folie an den angeschlossenen Meßdaten-Rechner 52, der einerseits über eine Schnittstelle mit dem Leitrechner 53 und andererseits mit einer Bildschirm-Anzeige 54 verbunden ist. In dem Leitrechner 53 sind charakteristische Kalibrierkurvenparameter a, b, c, d von unterschiedlichen Folientypen und Schrumpfabweichungen bzw. Schrumpfgrenzen für die einzelnen Folientypen gespeichert. Aufgrund der Abfrage des Meßdaten-Rechners 52 werden die gespeicherten charakteristischen Kalibrierkurvenparameter und die Schrumpfabweichungen bzw. Schrumpfgrenzen der einzelnen Folientypen in den Meßdaten-Rechner 52 vom Leitrechner 53 eingespeist. In dem Meßdaten-Rechner wird die Abweichung des Schrumpfunterschieds Δ S aus dem berechneten und dem gemessenen Schrumpfunterschied bestimmt und diese Abweichung an den Leitrechner 53 weitergeleitet. Der Leitrechner 53 ist mit Steuergliedern 62 bis 68 (vgl. Fig. 10) für die Friktion und die Umlaufgeschwindigkeit zwischen letzter Kalanderwalze 3 und erster Abzugswalze 4, für die Temperaturführung bzw. Kühlung der Abzugs- und Kühlwalzen 4 bis 11, bzw. 12 bis 18, für die Umlaufgeschwindigkeit der Abzugswalze 4 bis 11 und für die Temperaturführung der letzten Kalanderwalze 3 verbunden. Von dem Leitrechner 53 werden die Steuerglieder 62 bis 68 entweder einzeln, zu zweit, zu mehreren oder auch zugleich mit Steuersignalen beaufschlagt, um je nach Bedarf die Parameter im Abzug des Kalanders in der gewünschten Weise zu steuern.

Die Auswertung der von dem jeweiligen Empfänger des Schrumpfmeßgerätes 51 gemessenen Anisotropie-Wertes erfordert eine Umrechnung der Anisotropie-Werte in Schrumpfwerte, wozu eine Kalibrierkurve verwendet wird, welche die zuvor erwähnten charakteristischen Kalibrierkurvenparameter a, b, c, d in einem Polynom dritten Grades gemäß der Formel

$$f(y) = a + bx + cx^2 + dx^3$$

enthält, mit der Anisotropie f(y) und dem Schrumpf x. Die Kalibrierkurvenparameter a bis d, die für den jeweiligen Folientyp charakteristisch sind, werden so gewählt, daß eine Leermessung, d.h. eine Messung ohne Folie im Strahlengang des Schrumpfmeßgerätes durchgeführt wird. Dabei werden die Kalibrierkurvenparameter so festgelegt, daß die "Schrumpfwerte" bei der Leermessung den Anisotropie-Werten entsprechen.

Die Ausgabe der Anisotropie- und der Schrumpfwerte erfolgt zeitgleich und grafisch auf der Bildschirm-Anzeige 54. Während einer Messung werden beispielsweise immer 100 Werte an der Bildschirm-Anzeige ausgegeben, wobei sich jeder Wert wiederum aus einer beliebigen Anzahl von Mittelungen zusammensetzt. Eine Mittelung von 50 bedeutet, daß intern 50 Meßwerte aufgenommen werden, aus diesen das arithmetische Mittel gebildet und dieses angezeigt wird. Zusätzlich werden die 100 während einer Meßreihe aufgenommenen Schrumpfwerte wiederum gemittelt und als Digitalwerte zusammen mit der Standardabweichung angezeigt.

Die Kalibrierkurven werden durch die Messung an dem entsprechenden Folientyp überprüft.

Die automatische Steuerung bzw. Regelung im Abzug des Kalanders zur Minimierung des Schrumpfunterschiedes Δ S über die Folienbreite erfolgt in dem in Fig. 9 schematisch dargestellten Regelkreis. Dieser Regelkreis umfaßt Mittel 55 zur Temperaturmessung, Mittel 56 zur Folienbreitenmessung, Mittel 57 zur Berechnung des theoretischen Schrumpfunterschiedes Δ S, Mittel 58 zur Steuerung der Folientemperatur und Mittel 59 zur Steuerung des Einschnüreffekts zwischen der letzten Kalanderwalze und der ersten Abzugswalze. Das Mittel 55 ist beispielsweise eine Infrarotkamera oder ein IR-Scanner zur Messung der Folienoberflächentemperatur auf den Abzugswalzen 4 bis 11, wobei die Oberflächentemperaturen sowohl am Folienrand als auch in der Folienmitte gemessen werden (vgl. Fig. 2). Das Mittel 56 ist beispielsweise eine CCD-Einrichtung, mittels der die Folienbreite auf der letzten Kalanderwalze 3 und der ersten Abzugswalze **4** gemessen wird. In dem Mittel 57 erfolgt die Berechnung des theoretischen Schrumpfunterschiedes gemäß der Gleichung

$$\Delta\,S = \frac{t_{GM} - t_{GR}}{t_{GR}} + \frac{b_{LKW} - b_{EAW}}{b_{EAW}}$$

Die Mittel 58 und 59 werden anhand von Fig. 10 noch näher erläutert und dienen der Schrumpfregelung anhand von verschiedenen Einstellparametern im Abzug des Kalanders. So beeinflußt beispielsweise das Mittel 58 die Folientemperatur durch die Verstärkung des Kühlmitteldurchsatzes durch die Kalanderwalzen, Anblasen der Folienrandzonen mit Heißluft oder der Folienmitte mit Kaltluft. Das Mittel 59 verringert den Einschnüreffekt zwischen der letzten Kalanderwalze und der ersten Abzugswalze durch Veränderung des Abzugsverhältnisses, d.h. durch Veränderung der Umlaufgeschwindigkeiten der beiden Walzen durch Einsatz von Folienrandführungen oder durch Anblasen der Folienabzugslinie.

Eine Verstärkung des Kühlmitteldurchsatzes führt zu einer Vergleichmäßigung der Temperaturunterschiede auf der Walzenoberfläche und somit auch zu einer Vergleichmäßigung der Folientemperatur über der Folienbreite. Weitere Temperaturunterschiede auf der Folienoberfläche, die von unterschiedlichen Luftschichtdicken zwischen der Walze und der Folie herrühren können, werden durch Anblasen der Folienrandzonen mit Heißluft oder der Folienmitte mit Kaltluft korrigiert. Dadurch wird über eine Relaxationszeitänderung der Glaspunkt am Folienrand bzw. in der Folienmitte verschoben. Der Einschnüreffekt zwischen der letzten Kalanderwalze und der ersten Abzugswalze kann über eine Reduzierung der Abzugsfriktion bzw. durch den Einsatz von Folienhaltemechanismen, wie beispielsweise Kluppen, minimiert werden. Ein Anblasen der Kalanderabzugslinie über einen Luftrakel bewirkt eine Vergleichmäßigung dieser Abzugslinie und damit eine Verringerung des Einschnüreffekts.

Fig. 10 zeigt in Diagramm-Form eine Anordnung von Stellgliedern zu Steuerung des Schrumpfes auf der Basis der von dem Schrumpfmeßgerät erhaltenen Meßwerte in der Folienmitte und am Folienrand. Ein Stellglied 60 speist ein Steuersignal für die Schrumpfsteuerung in das Stellglied 61 zur Minimierung des Schrumpfunterschiedes ΔS ein. Von dem Stellglied 61 aus erfolgt die Steuerung des Schrumpfes nicht isoliert über einzelne weitere Steuerglieder zur Beeinflussung eines einzelnen Einstellparameters. Vielmehr wirken die verschiedenen Stellglieder 62 bis 68 interdependent aufeinander ein und beeinflussen gleichzeitig auch Qualitätseigenschaften der Folie wie Dickentoleranz, Glanz, Isotropie und dergleichen. Die Stellglieder 62 und 66 steuern die Friktion zwischen der letzten Kalanderwalze und der ersten Abzugswalze bzw. regeln die Geschwindigkeit der letzten Kalanderwalze und der ersten Abzugswalze. Die Stellglieder 63 und 67 steuern die Geschwindigkeit des Abzuges des Kalanders, d.h. die Umlaufgeschwindigkeiten der Abzugswalzen 4 bis 11 gemäß Fig. 2. Die Stellglieder 62, 63, 66 und 67 bilden das in Fig. 9 zusammenfassend dargestellte Mittel 59 des Regelkreises.

Die Stellglieder 64 und 68 steuern die Temperatur der Abzugswalzen 4 bis 11 bzw. der Kühlwalzen 12 bis 18 gemäß Fig. 2. Ein Stellglied 65 übernimmt die Temperatursteuerung der letzten Kalanderwalze 3 in Fig. 2. Die Stellglieder 64, 65 und 68 entsprechen dem Mittel 58 des Regelkreises gemäß Fig. 9. Bei der Steuerung des Schrumpfes wird die Regelung über die Friktion mit gleichzeitiger Anpassung der Foliendicke bevorzugt, jedoch werden die übrigen Einzelparameter wie die Temperaturführung der Abzugs- und Kühlwalzen sowie die Temperatursteuerung der letzten Kalanderwalze ebenso wie die Umfangsgeschwindigkeit der Abzugswalzen einzeln, zu mehreren oder alle zugleich neben der Friktion gesteuert, falls die Friktionssteuerung allein die gewünschte Regelung des Schrumpfes nicht bewirken kann. Das Stellglied 69 nimmt die synchrone Nachschaltung der Schrumpfsteuerung vor.

Falls sich über die anhand des Diagramms der Fig. 10 beschriebenen Steuermöglichkeiten eine Schrumpfveränderung nicht herbeiführen läßt, ist es erforderlich, die Geschwindigkeitssteuerung der Gesamtanlage, d.h. des Kalanders einschließlich des Abzugs neu zu regeln.

**Patentansprüche**

1. Verfahren zur kontinuierlichen Regelung des Schrumpfes einer amorphen Folie während des Abziehens von einem Kalander, wobei der Schrumpf über die Folienbreite und -länge anhand des Dichroismus oder der Doppelbrechung der Folie gemessen wird, **dadurch gekennzeichnet, daß** laufend der Schrumpf in der Mitte und am Rand der Folie gemessen wird, daß aus einem gemittelten Schrumpf für die Mitte und den Rand aus einer Anzahl von laufend gemessenen Schrumpfwerten ein Schrumpfunterschied ΔS gebildet wird und daß bei einer Abweichung größer als ± 0,5 % des Schrumpfunterschieds von einem vorgegebenen Schrumpfunterschied zumindest einer der Parameter wie die Friktion und die Umlaufgeschwindigkeit zwischen der letzten Kalanderwalze und der ersten Abzugswalze, die Temperatur und Umlaufgeschwindigkeit der Kalander- und Abzugswalzen so geändert wird, daß der Schrumpfunterschied ΔS innerhalb des Bereichs aus vorgegebenem Schrumpfunterschied ± 0,5 % Abweichung gehalten wird.

2. Verfahren nach Anspruch 1, **dadurch gekennzeichnet, daß** die Zeit bis zum Erreichen der Glaspunkttemperatur in der Mitte und am Rand der vom Kalander abgezogenen Folie sowie die Folienbreiten auf der letzten Kalanderwalze und der ersten Abzugswalze gemessen werden, und daß ein Schrumpfunterschied ΔS zwischen der Mitte und dem Rand gemäß der Nährungsformel

$$\Delta S = \frac{t_{GM} - t_{GR}}{t_{GR}} + \frac{b_{LKW} - b_{EAW}}{b_{EAW}}$$

$$= t_{GM} / t_{GR} + b_{LKW} / b_{EAW} - 2$$

bestimmt wird, mit den Zeiten $t_{GM}$, $t_{GR}$ zum Erreichen der Glaspunkttemperatur in der Folienmitte und am -rand und den Folienbreiten $b_{LKW}$, $b_{EAW}$ auf der letzten Kalanderwalze und der ersten Abzugswalze und daß dieser Schrumpfunterschied $\Delta S$ minimiert wird.

3. Verfahren nach Anspruch 2, **dadurch gekennzeichnet, daß** die Temperatur der Folienoberfläche in der Mitte und am Rand auf den Abzugswalzen mittels einer Infrarotkamera gemessen wird.

4. Verfahren nach Anspruch 2, **dadurch gekennzeichnet, daß** die Folienbreite auf der letzten Kalanderwalze und der ersten Abzugswalze mit Hilfe einer CCD-Einrichtung gemessen wird.

5. Verfahren nach Anspruch 1, **dadurch gekennzeichnet, daß** zur Schrumpfmessung die Folie mit linear polarisierten Laserlicht im Wellenlängenbereich von 400 bis 900 nm, insbesondere 670 nm, durchstrahlt wird, daß die Orientierung der Polarisationsebene des Laserlichtes gegenüber der Folienlängsrichtung geneigt ist, wodurch das linear polarisierte Laserlicht beim Durchstrahlen der Folie teilweise zirkular polarisiert und mittels einer Optik in einem linear polarisierten Hauptstrahl zurückgebildet wird, den ein nachgeschaltetes Beugungselement in bis zu n Teilstrahlen aufteilt, von denen jeder auf ein Fotoelement, ausgerüstet mit einem Polarisationsfilter, eines Detektorringes gelenkt wird.

6. Verfahren nach Anspruch 5, **dadurch gekennzeichnet, daß** die Polarisationsrichtung der Polarisationsfilter in Radialrichtung des Detektorringes jeweils 360°/n um die optische Achse des Hauptstrahles gedreht wird und daß die Meßspannungen der Fotoelemente die Intensitätsverteilung des Lichtes nach dem Durchstrahlen der Folie und demnach die Anisotropie der Folie wiedergeben, die mittels einer Kalibrierkurve für die gemessene Folie in den Schrumpf umgerechnet wird.

7. Verfahren nach Anspruch 5, **dadurch gekennzeichnet, daß** n im Bereich von 18 bis 72, insbesondere gleich 36 gewählt wird.

8. Verfahren nach Anspruch 6, **dadurch gekennzeichnet, daß** für die Umrechnung der Anisotropie (y) in den Schrumpf x ein Polynom 3. Grades als Kalibrierkurve

$$f(y) = a + bx + cx^2 + dx^3$$

gewählt wird, wobei die für den jeweiligen Folientyp charakteristischen Kalibrierkurvenparameter a, b, c, d so gewählt werden, daß die Schrumpfwerte den Anisotropiewerten bei einer Messung ohne Folie im Strahlengang entsprechen.

9. Verfahren nach Anspruch 1, **dadurch gekennzeichnet, daß** die Folientemperatur über die Folienbreite durch verstärkten Kühlmitteldurchsatz in den Abkühlwalzen vergleichmäßigt wird.

10. Verfahren nach Anspruch 1, **dadurch gekennzeichnet, daß** die Folienrandzonen mit Heißluft zur Vergleichmäßigung des Folientemperaturprofils über die Folienbreite angeblasen werden.

11. Verfahren nach Anspruch 1, **dadurch gekennzeichnet, daß** die Folienmitte mit Kaltluft zur Vergleichmäßigung des Folientemperaturprofils über die Folienbreite beaufschlagt wird.

12. Verfahren nach Anspruch 1, **dadurch gekennzeichnet, daß** ein Einschnüreffekt, der zwischen der letzten Kalanderwalze und der ersten Abzugswalze auf die Folie einwirkt, durch Veränderungen der Abzugsgeschwindigkeiten, d.h. der Umlaufgeschwindigkeiten der Abzugswalzen, minimiert wird.

13. Verfahren nach Anspruch 1, **dadurch gekennzeichnet, daß** zur Minimierung des Einschnüreffekts die Folie an den Rändern mittels Kluppen geführt wird.

14. Verfahren nach Anspruch 1, **dadurch gekennzeichnet, daß** die Folienabzugslinie auf der letzten Kalanderwalze mit Druckluft aus einem Luftrakel zur Verringerung des Einschnüreffekts beaufschlagt wird.

15. Verfahren nach Anspruch 1, **dadurch gekennzeichnet, daß** zumindest zwei bis alle der Verfahrensschritte nach den Ansprüchen 9 bis 14 gleichzeitig angewandt werden.

16. Anordnung zur kontinuierlichen Regelung des Schrumpfes einer amorphen Folie während des Abziehens von einem Kalander, **dadurch gekennzeichnet, daß** ein Schrumpfmeßgerät (51) Meßdaten über den Schrumpf der Folie (1; 46) an einen angeschlossenen Meßdaten-Rechner (52) liefert, der einerseits über eine Schnittstelle mit einem Leitrechner (53) und andererseits mit einer Bildschirmanzeige (54) verbunden ist, daß in dem Leitrechner (53) charakteristische Kalibrierkurvenparameter (a, b, c, d) von verschiedenen Folientypen und Schrumpfabweichungen bzw. Schrumpfgrenzen gespeichert sind, die auf Abfrage in den Meßdaten-Rechner (52) eingespeist werden, der aus dem berechneten Schrumpfunterschied und dem gemessenen Schrumpfunterschied zwischen der Folienmitte und dem Folienrand die Abweichung des Schrumpfunterschiedes $\Delta S$ bestimmt und an den Leitrechner weiterleitet, und daß der Leitrechner (53) mit Stellgliedern (62 bis 68) für die Friktion und die Umlaufgeschwindigkeit zwischen letzter Kalanderwalze (3) und erster Abzugswalze (4), für die Temperaturführung bzw. Kühlung der Abzugs- und Kühlwalzen (4-11, 12-18), für die Umlaufgeschwindigkeit der Abzugswalzen (4-11) und für die Temperaturführung der letzten Kalanderwalze (3) verbunden ist und die Stellglieder (62-68) einzeln, zu zweit, zu mehreren oder alle zugleich mit Steuersignalen beaufschlagt.

17. Anordnung nach Anspruch 16, **dadurch gekennzeichnet, daß** eine erste Ausführungsform (19) des Schrumpfmeßgeräts einen Rahmen aus einem U-Profil (20,21,22) aufweist, daß ein Meßkopf aus einer Lichtquelle (73) und einem Empfänger (74) entlang Schenkeln (20,21) des U-Profils verschiebbar ist, wobei die Längen der Schenkeln so gewählt sind, daß sich der Meßkopf bis in die Bahnmitte einer Folie (1) verschieben läßt, die zwischen den beiden Schenkeln sowie der Lichtquelle (73) und dem Empfänger (74) hindurchläuft.

18. Anordnung nach Anspruch 17, **dadurch gekennzeichnet, daß** zwei Linearführungen (75,76) nahe der Kalanderlinie quer zur Laufrichtung der Folie (1) angeordnet sind, die mit zwei Führungsschlitten (77,78) bestückt sind, auf denen die jeweilige Ausführungsform (19, 42) des Schrumpfmeßgeräts befestigt ist und daß die Führungsschlitten motorisch angetrieben sind.

19. Anordnung nach Anspruch 17, **dadurch gekennzeichnet, daß** die Lichtquelle (73) ein Laser mit einer Leistung von 2 bis 4 mW im roten Wellenlängenbereich ist und daß der Empfänger (74) aus einem einzelnen Fotoelement (72) besteht.

20. Anordnung nach Anspruch 17, **dadurch gekennzeichnet, daß** die Lichtquelle (73) und der Empfänger (74) jeder für sich in einem Zylinderrohr (23,24) eingebaut sind, daß die Zylinderrohe senkrecht zu den jeweiligen Schenkeln (20,21) des U-Profils sich gegenüberliegend montiert und um die optische Achse Lichtquelle-Empfänger justiert sind und daß stirnseitig an jedem Zylinderrohr (23,24) zur Folienbahn hin ein Drehteil (29,30) mit einem Polarisationsfilter (31,31) angesetzt ist.

21. Anordnung nach Anspruch 20, **dadurch gekennzeichnet, daß** jedes Zylinderrohr (23,24) außenseitig mit einer Zahnscheibe (27,28) verbunden ist, über die ein Endlos-Zahnflachriemen (25,26) geführt ist, der über eine weitere Zahnscheibe (35,36) einer Achse (34) umläuft, die ein Motor (32) antreibt.

22. Anordnung nach Anspruch 21, **dadurch gekennzeichnet, daß** auf der Achse (34) die beiden Zahnscheiben (35,36) aufsitzen, über die je ein Endlos-Zahnflachriemen (25,26) umläuft, daß eine synchrone Drehung von Lichtquelle (73) und Empfänger (74) über die Drehung der Achse (34) erfolgt, und daß die Drehrichtung der Achse (34) bzw. des Motors (32) umkehrbar ist.

23. Anordnung nach Anspruch 20, **dadurch gekennzeichnet, daß** die Zylinderrohre (23,24) in Stehlagergehäusen (37,38) gelagert sind.

24. Anordnung nach Anspruch 20, **dadurch gekennzeichnet, daß** die Positionen der Polarisationsfilter (31,31) gegenüber der Lichtquelle (73) und dem Empfänger (74) in den Drehteilen (29,30) justierbar sind.

25. Anordnung nach Anspruch 16, **dadurch gekennzeichnet, daß** ein Meßkopf einer zweiten Ausführungsform (42) des Schrumpfmeßgeräts aus einem Laser als Lichtquelle (43) und einem Empfänger (45) besteht, der ein optisches System (44), ein Beugungselement (81) und einen Detektorring (49) mit einer Anzahl n von Fotoelementen (50) umfaßt, daß jedes Fotoelement mit einem Polarisationsfilter (79) ausgerüstet ist und daß der Meßkopf in einem U-Profil (82) angeordnet ist, das die Maschinenrichtung traversiert.

26. Anordnung nach Anspruch 25, **dadurch gekennzeichnet, daß** die Anzahl n der Fotoelemente (50) im Bereich von 18 bis 72 liegt und insbesondere n gleich 36 ist.

27. Anordnung nach Anspruch 25, **dadurch gekennzeichnet, daß** die Polarisationsrichtung von Polarisationsfilter (79) zu Polarisationsfilter (79) jeweils um 360°/n in Radialrichtung des Detektorrings (49) um die optische Achse des Hauptstrahls (47) der Lichtquelle (43) gedreht ist.

28. Anordnung nach Anspruch 25, **dadurch gekennzeichnet, daß** zwischen einer Eintrittsöffnung (80) in den Empfänger (45) und dem Detektorring (49) ein optisches System (44) angeordnet ist, welches das durch die Folienbahn transmittierte zirkulare Licht in einen linear polarisierten Hauptstrahl (47) zurückbildet, den das nachgeschaltete Beugungselement (81) in n Teilstrahlen aufteilt, von denen jeweils einer auf ein Polarisationsfilter (79) und das dahinter liegende Fotoelement (50) auftrifft.

## Claims

1. A method for continuously regulating the shrinkage of an amorphous film during taking-off from a calender, the shrinkage being measured over the film width and film length with the aid of the dichroism or the birefringence of the film, wherein the shrinkage is measured continuously in the middle and at the edge of the film, wherein use is made of an average shrinkage for the middle and the edge to form a shrinkage difference $\Delta S$ from a number of continuously measured shrinkage values, and wherein in the event of a deviation of greater than $\pm 0.5\%$ of the shrinkage difference from a prescribed shrinkage difference, at least one of the parameters such as the friction and the rotational speed between the last calender roll and the first take-off roll, the temperature and the rotational speed of the calender and take-off rolls is altered such that the shrinkage difference $\Delta S$ is kept within the range of the prescribed shrinkage difference $\pm 0.5\%$ deviation.

2. The method as claimed in claim 1, wherein the time up to reaching the glass transition temperature in the middle and at the edge of the film taken off from the calender, as well as the film widths on the last calender roll and the first take-off roll are measured, and wherein a shrinkage difference $\Delta S$ between the middle and the edge is determined in accordance with the approximate formula

$$\Delta S = \frac{t_{GM} - T_{GR}}{t_{GR}} + \frac{b_{LKW} - b_{EAW}}{b_{EAW}}$$

$$= t_{GM}/t_{GR} + b_{LKW}/b_{EAW} - 2$$

using the times $t_{GM}$, $t_{GR}$ for reaching the glass transition temperature in the middle of the film and at the edge of the film and the film widths $b_{LKW}$, $b_{EAW}$ on the last calender roll and the first take-off roll, and wherein this shrinkage difference $\Delta S$ is minimized.

3. The method as claimed in claim 2, wherein the temperature of the film surface is measured in the middle and at the edge on the take-off rolls by means of an infrared camera.

4. The method as claimed in claim 2, wherein the film width on the last calender roll and the first take-off roll is measured with the aid of a CCD device.

5. The method as claimed in claim 1, wherein for the purpose of shrinkage measurement, the film is transilluminated with linearly polarized laser light in the wavelength region from 400 to 900 nm, in particular 670 nm, and wherein the orientation of the plane of polarization of the laser light is inclined with respect to the film longitudinal direction, as a result of which upon transilluminating the film the linearly polarized laser light is partially circularly polarized and reformed by means of an optical system in a linearly polarized main beam which a downstream diffracting element splits into n component beams of which each is directed onto a photoelement, equipped with a polarization filter, of a detector ring.

6. The method as claimed in claim 5, wherein the direction of polarization of the polarization filter is in each case rotated $360°/n$ in the radial direction of the detector ring about the optical axis of the main beam, and wherein the measuring voltages of the photoelements reproduce the intensity distribution of the light after transilluminating the film and, consequently, the anisotropy of the film, which is converted into the shrinkage by means of a calibration curve for the measured film.

7. The method as claimed in claim 5, wherein n is selected in the range from 18 to 72, in particular equal to 36.

8. The method as claimed in claim 6, wherein a polynomial of 3rd degree is selected as calibration curve

$$f(y) = a + bx + cx^2 + dx^3$$

for converting the anisotropy (y) into the shrinkage x, the calibration curve parameters a, b, c, d characteristic of the respective film type being selected such that the shrinkage values correspond to the anisotropy values in the case of a measurement without film in the beam path.

9. The method as claimed in claim 1, wherein the film temperature is smoothed out over the film width by increased coolant throughput in the chill rolls.

10. The method as claimed in claim 1, wherein hot air is blown onto the film edge zones in order to smooth out the film temperature profile over the film width.

11. The method as claimed in claim 1, wherein cold air is applied to the film middle in order to smooth out the film temperature profile over the film width.

12. The method as claimed in claim 1, wherein a constricting effect which acts on the film between the last calender roll and the first take-off roll is minimized by changes in the take-off speeds, that is to say the rotational speeds of the take-off rolls.

13. The method as claimed in claim 1, wherein the film is guided at the edges by means of tenters in order to minimize the constricting effect.

14. The method as claimed in claim 1, wherein in the film take-off line compressed air from an air knife is applied to the last calender roll in order to reduce the constricting effect.

15. The method as claimed in claim 1, wherein at least two to all the method steps as claimed in claims 9 to 14 are applied simultaneously.

16. An arrangement for continuously controlling the shrinkage of an amorphous film during taking-off from a calender, wherein a shrinkage measuring instrument (51) supplies measured data concerning the shrinkage of the film (1; 46) to a connected measured-data computer (52) which is connected, on the one hand, via an interface to a master computer (53) and, on the other hand, to a screen display (54), wherein characteristic calibration curve parameters (a, b, c, d) of different film types and shrinkage deviations and/or shrinkage limits are stored in the master computer (53) and are upon request, fed into the measured-data computer (52) which uses the calculated shrinkage difference and the measured shrinkage difference between the film middle and the film edge to determine the deviation in the shrinkage difference ∆S and to relay it to the master computer, and wherein the master computer (53) is connected to actuators (62 to 68) for the friction and the rotational speed between the last calender roll (3) and first take-off roll (4), for the temperature control or cooling of the take-off and chill rolls (4-11, 12-18), for the rotational speed of the take-off rolls (4-11) and for the temperature control of the last calender roll (3), and control signals are applied to individual, to pairs of, to a plurality of, or simultaneously to all the actuators (62-68).

17. The arrangement as claimed in claim 16, wherein a first embodiment (19) of the shrinkage measuring instrument has a frame made from a U-profile (20, 21, 22), and wherein a measuring head comprising a light source (73) and a receiver (74) can be displaced along limbs (20, 21) of the U-profile, the lengths of the limbs being selected such that the measuring head can be displaced as far as into the web middle of a film (1) which runs through between the two limbs as well as the light source (73) and the receiver (74).

18. The arrangement as claimed in claim 17, wherein two linear guides (75, 76) are arranged near the calender line transverse to the running direction of the film (1) and are fitted with two guide carriages (77, 78) on which the respective embodiment (19, 42) of the shrinkage measuring instrument is fastened, and wherein the guide carriages are driven by motor.

19. The arrangement as claimed in claim 17, wherein the light source (73) is a laser with a power of 2 to 4 mW in the red wavelength region, and wherein the receiver (74) consists of a single photoelement (72).

20. The arrangement as claimed in claim 17, wherein the light source (73) and the receiver (74) are each individually installed in a cylindrical tube (23, 24), wherein the cylindrical tubes are mounted opposite one another perpendicular to the respective limbs (20, 21) of the U-profile and are adjusted about the optical axis of the light-source receiver, and wherein a rotary part (29, 30) with a polarization filter (31, 31) is mounted on the end face of each cylindrical tube (23, 24) pointing towards the film web.

21. The arrangement as claimed in claim 20, wherein each cylindrical tube (23, 24) is connected on the outside to a toothed disk (27, 28) over which there is guided an endless flat toothed belt (25, 26) which runs around a further toothed disk (35, 36) of a shaft (34) which drives a motor (32).

22. The arrangement as claimed in claim 21, wherein seated on the shaft (34) are the two toothed disks (35, 36) around which one endless flat toothed belt (25, 26) each runs , wherein a synchronous rotation of the light source (73) and receiver (74) is produced by the rotation of the shaft (34), and wherein the direction of rotation of the shaft (34) and/or the motor (32) is reversible.

23. The arrangement as claimed in claim 20, wherein the cylindrical tubes (23, 24) are mounted in pedestal bearing housings (37, 38).

24. The arrangement as claimed in claim 20, wherein the positions of the polarization filters (31, 31) with respect to the light source (73) and the receiver (74) can be adjusted in the rotary parts (29, 30).

25. The arrangement as claimed in claim 16, wherein a measuring head of a second embodiment (42) of the shrinkage measuring instrument consists of a laser as light source (43) and a receiver (45) which comprises an optical system (44), a diffracting element (81) and a detector ring (49) with a number n of photoelements (50), wherein each photoelement is equipped with a polarization filter (79), and wherein the measuring head is arranged in a U-profile (82) which traverses the machine direction.

26. The arrangement as claimed in claim 25, wherein the number n of the photoelements (50) is in the range from 18 to 72 and n is equal to 36, in particular.

27. The arrangement as claimed in claim 25, wherein the direction of polarization from polarization filter (79) to polarization filter (79) is rotated in each case by 360°/n in the radial direction of the detector ring (49) about the optical axis of the main beam (47) of the light source (43).

28. The arrangement as claimed in claim 25, wherein there is arranged between an inlet opening (80) into the receiver (45) and the detector ring (49) an optical system (44) which reforms the circular light, transmitted through the film web, into a linearly polarized main beam (47) which is split by the downstream diffracting element (81) into n component beams of which in each case one impinges on a polarization filter (79) and the photoelement (50) situated therebehind.

**Revendications**

1. Procédé de régulation continue de la contraction d'une feuille amorphe pendant le tirage à partir d'une calandre, la contraction sur la longueur et sur la largeur de la feuille étant mesurée sur la base du dichroïsme ou de la biréfringence de la feuille, **caractérisé en ce qu'**on mesure en permanence la contraction au centre et sur le bord de la feuille, qu'on forme une différence de contraction ΔS à partir d'une contraction moyenne pour le milieu et pour le bord à partir d'un nombre de valeurs de contraction mesurées en continu, et que dans le cas d'un écart supérieur à ± 0,5 % de la différence de contraction par rapport à une différence de contraction prédéterminée, au moins un des paramètres tels que le frottement et la vitesse circonférentielle entre le dernier cylindre de calandre et le premier cylindre de tirage, la température et la vitesse circonférentielle des cylindres de calandre de tirage est modifié de telle sorte que la différence de contraction ΔS est maintenue à l'intérieur de la gamme formée à partir de la différence de contraction prédéterminée ± l'écart de 0,5 %.

2. Procédé selon la revendication 1, **caractérisé en ce qu'**on mesure l'intervalle de temps s'étendant jusqu'à ce que soit atteinte la température de transition vitreuse au centre et sur le bord de la feuille tirée de la calandre, ainsi que les largeurs des feuilles sur le dernier cylindre de calandre et le premier cylindre de tirage, et qu'une différence de contraction ΔS entre le centre et le bord est déterminée conformément à la formule d'approximation

$$\Delta S = \frac{t_{GM} - t_{GR}}{t_{GR}} + \frac{b_{LKW} - b_{EAW}}{b_{EAW}}$$

$$= t_{GM} / t_{GR} + b_{LKW} / b_{EAW} - 2$$

$t_{GM}$ et $t_{GR}$ désignant les durées pour atteindre la température de transition vitreuse au centre de la feuille et au bord de la feuille, $b_{LKV}$, $b_{EAW}$ désignant les largeurs de la feuille sur le dernier cylindre de calandre et sur le premier cylindre de tirage, et qu'on réduit au minimum cette différence de contraction ΔS.

3. Procédé selon la revendication 2, **caractérisé en ce qu'**on mesure la température de la surface de la feuille au centre et au bord sur les cylindres de tirage, en utilisant une caméra infrarouge.

4. Procédé selon la revendication 2, **caractérisé en ce qu'**on mesure la largeur de la feuille sur le dernier cylindre de calandre et sur le premier cylindre de tirage à l'aide d'un dispositif CCD.

5. Procédé selon la revendication 1, **caractérisé en ce que** pour la mesure de contraction, la feuille est traversée par une lumière laser polarisée linéairement dans la gamme des longueurs d'onde comprises entre 400 et 900 nm, et égale notamment à 670 nm, qu'on incline l'orientation du plan de polarisation de la lumière laser par rapport à la direction longitudinale de la feuille, ce qui a pour effet que la lumière laser polarisée linéairement est polarisée en partie circulairement lorsqu'elle traverse la feuille et est réfléchie au moyen d'un système optique sous la forme d'un faisceau principal polarisé linéairement qu'un élément de diffraction installé en aval divise en un nombre atteignant jusqu'à n faisceaux partiels, dont chacun est dévié en direction d'un élément photosensible, équipé d'un filtre de polarisation, d'un anneau de détecteurs.

6. Procédé selon la revendication 5, **caractérisé en ce qu'**on fait pivoter la direction de polarisation des filtres de polarisation dans la direction radiale de l'anneau de détecteurs respectivement sur 360°/n autour de l'axe optique du faisceau principal, et que les tensions de mesure des éléments photosensibles reproduisent la distribution de l'intensité de lumière après la traversée de la feuille et par conséquent l'anisotropie de la feuille, qui est convertie en la contraction à l'aide d'une courbe d'étalonnage pour la feuille mesurée.

**7.** Procédé selon la revendication 5, **caractérisé en ce que** n est choisi dans la gamme allant de 18 à 72, et notamment est choisi égal à 36.

**8.** Procédé selon la revendication 6, **caractérisé en ce que** pour la conversion de l'anisotropie (y) en la contraction x, on choisit un polynôme du 3-ème degré en tant que courbe d'étalonnage

$$f(y) = a+bx+cx^2+dx^3$$

les paramètres a, b, c, d de la courbe d'étalonnage, qui sont caractéristiques de chaque type de feuille, étant choisis de telle sorte que les valeurs de contraction correspondent aux valeurs d'anisotropie lors d'une mesure sans feuille dans le trajet de rayonnement.

**9.** Procédé selon la revendication 1, **caractérisé en ce que** la température de la feuille est uniformisée sur la largeur de la feuille au moyen d'un débit renforcé du fluide de refroidissement dans les cylindres de refroidissement.

**10.** Procédé selon la revendication 1, **caractérisé en ce qu'**on souffle de l'air chaud sur les zones marginales de la feuille pour uniformiser le profil de température de la feuille sur la largeur de cette dernière.

**11.** Procédé selon la revendication 1, **caractérisé en ce qu'**on charge le centre de la feuille avec de l'air froid pour uniformiser le profil de température de la feuille sur la largeur de cette dernière.

**12.** Procédé selon la revendication 1, **caractérisé en ce qu'**on réduit un effet d'étranglement, qui agit sur la feuille entre le dernier cylindre de calandre et le premier cylindre de tirage, au moyen de modifications des vitesses de tirage, c'est-à-dire des vitesses circonférentielles des cylindres de tirage.

**13.** Procédé selon la revendication 1, **caractérisé en ce que** pour réduire l'effet d'étranglement, la feuille est guidée au niveau de ces bords à l'aide de pinces.

**14.** Procédé selon la revendication 1, **caractérisé en ce qu'**on charge la chaîne de tirage de la feuille, au niveau du dernier cylindre de calandre, avec de l'air comprimé provenant d'une racle pneumatique, de manière à réduire l'effet d'étranglement.

**15.** Procédé selon la revendication 1, **caractérisé en ce qu'**on met en oeuvre simultanément au moins deux et jusqu'à la totalité des étapes de procédé selon les revendications 9 à 14.

**16.** Dispositif de régulation continue de la contraction d'une feuille amorphe pendant le tirage à partir d'une calandre, **caractérisé en ce qu'**un appareil (51) de mesure de contraction délivre des données de mesure concernant la contraction de la feuille (1; 46) à un calculateur raccordé (52) de données de mesure, qui est relié d'une part par l'intermédiaire d'une interface à un calculateur pilote (53) et d'autre part à une unité d'affichage à écran (54), que dans le calculateur pilote (53) sont mémorisés des paramètres caractéristiques (a, b, c, d) de courbes d'étalonnage de différents types de feuilles ainsi que des écarts de contraction ou des limites de contraction, qui, sont introduites sur demande dans le calculateur de données de mesure (52), qui, à partir de la différence de contraction calculée et de la différence de contraction mesurée entre le centre de la feuille et le bord de la feuille, détermine l'écart de la différence de contraction ΔS et la transmet au calculateur pilote, et que le calculateur pilote (53) est relié à des organes de réglage (62 à 68) du frottement et de la vitesse circonférentielle entre le dernier cylindre de calandre (3) et le premier cylindre de tirage (4), pour le pilotage de la température ou le refroidissement des cylindres de tirage et de refroidissement (4-11, 12-18), pour la vitesse circonférentielle des cylindres de tirage (4-11) et pour le pilotage de la température du dernier cylindre de calandre (3) et applique des signaux de commande aux organes de réglage (62-68), individuellement, par deux ou par plusieurs ou dans leur totalité.

**17.** Dispositif selon la revendication 16, **caractérisé en ce qu'**une première forme de réalisation (19) de l'appareil de mesure de contraction comporte un cadre d'un profilé en U (20, 21, 22), qu'une tête de mesure formée d'une source de lumière (73) et d'un récepteur (74) est déplaçable le long de branches (20, 21) du profilé en U, les longueurs des branches étant choisies de manière que la tête de mesure puisse se déplacer jusqu'au centre de la bande d'une feuille (1), qui circule entre les deux branches, de même que la source de lumière (73) et le récepteur (74).

**18.** Dispositif selon la revendication 17, **caractérisé en ce que** deux guides linéaires (75, 76) sont disposés à proximité de la chaîne de calandre transversalement par rapport à la direction de déplacement de la feuille (1), ces guides étant équipés de deux chariots de guidage (77, 78), sur lesquels la forme de réalisation respective (19, 42) de l'appareil de mesure de contraction est fixée, et que les chariots de guidage sont entraînés par des moteurs.

**19.** Dispositif selon la revendication 17, **caractérisé en ce que** la source de lumière (73) est un laser possédant une puissance comprise entre 2 et 4 mW dans la gamme des longueurs d'onde de la couleur rouge, et que le récepteur (74) est constitué par un photoélément individuel (72).

20. Dispositif selon la revendication 17, **caractérisé en ce que** la source de lumière (73) et le récepteur (74) sont montés chacun dans un tube cylindrique (23, 24), que les tubes cylindriques sont montés en vis-à-vis perpendiculairement aux branches respectives (20, 21) du profilé en U et sont ajustés autour de l'axe optique source de lumière - récepteur, et qu'une pièce rotative (29, 30) comportant un filtre de polarisation (31, 31) est montée frontalement sur chaque tube cylindrique (23, 24) en direction de la bande de feuille.

21. Dispositif selon la revendication 20, **caractérisé en ce que** chaque tube cylindrique (23, 24) est relié sur le côté extérieur à une poulie dentée (27, 28) sur laquelle est guidée une courroie dentée en forme de bande sans fin (25, 26), qui circule sur une autre poulie dentée (35, 36) d'axe (34) et qui entraîne un moteur (32).

22. Dispositif selon la revendication 21, **caractérisé en ce que** sur l'axe (34) sont montés les deux poulies dentées (35, 36), sur lesquelles circulent respectivement une courroie dentée sans fin (25, 26), qu'il se produit une rotation synchrone de la source de lumière (73) et du récepteur (74) lors de la rotation de l'axe (34), et que le sens de rotation de l'axe (34) ou du moteur (32) peut être inversé.

23. Dispositif selon la revendication 20, **caractérisé en ce que** les tubes cylindriques (23, 24) sont montés dans des carters formant chaises-paliers (37, 38).

24. Dispositif selon la revendication 20, **caractérisé en ce que** les positions des filtres de polarisation (30, 31) par rapport à la source de lumière (73) et au récepteur (74) peuvent être ajustées dans les pièces rotatives (29, 30).

25. Dispositif selon la revendication 16, **caractérisé en ce qu'**une tête de mesure d'une seconde forme de réalisation (42) de l'appareil de mesure de contraction est constituée par un laser en tant que source de lumière (43) et par un récepteur (45), qui comprend un système optique (44), un élément de diffraction (81) et un anneau de détecteurs (49) comportant un nombre n d'éléments photosensibles (50), que chaque élément photosensible est équipé d'un filtre de polarisation (79), et que la tête de mesure est disposée dans un profilé en U (82), qui s'étend dans le sens de la machine.

26. Dispositif selon la revendication 25, **caractérisé en ce que** le nombre n d'éléments photosensibles (50) se situe dans la gamme comprise entre 18 et 72, et notamment n est égal à 36.

27. Dispositif selon la revendication 25, **caractérisé en ce que** la direction de polarisation d'un filtre de polarisation (79) est pivotée par rapport au filtre de polarisation (79) respectivement sur $360°/n$ dans la direction radiale de l'anneau de détecteurs (49) autour de l'axe optique du faisceau principal (47) de la source de lumière (43).

28. Dispositif selon la revendication 25, **caractérisé en ce qu'**entre une ouverture d'entrée (80) formée dans le récepteur (45) et l'anneau de détecteurs (49) est disposé un système optique (44), qui réfléchit la lumière circulaire, transmise par la bande formée par la feuille, sous la forme d'un faisceau principal polarisé linéairement (47) que l'élément de diffraction (81) disposé en aval divise en n faisceaux partiels, dont chacun rencontre un filtre de polarisation (79) et l'élément photosensible (5C) disposé en arrière dudit filtre.

1

A · sin ε

A · cos ε

ε

o

m

r

l

**FIG.1**

LKW 3

EAW 6 8 10 1 14 16 18

4 5 7 9 11 12 13 15 17

2

**FIG. 2**

FIG. 3

FIG. 4

FIG. 5

FIG. 6

FIG. 7

**FIG. 8**

**FIG. 9**

55 — Messung der Folienoberflächentemperaturen auf den Abzugswalzen (mittig und am Rand)

56 — Messung der Folienbreite auf
letzter Kalanderwalze LKW und
erster Abzugswalze EAW

57 — Berechnung des theoretischen Schrumpfunterschiedes über

$$\Delta S = t_{GM} / t_{GR} - 1 + b_{LKW} / b_{EAW} - 1 = t_{GM} / t_{GR} + b_{LKW} / b_{EAW} - 2$$

58 — Beeinflussung der Folientemperatur
- über Verstärkung des Kühlmitteldurchsatzes
- Anblasen der Folienrandzonen mit Heißluft
  oder der Folienmitte mit Kaltluft

59 — Verringerung des Einschnüreffektes LKW / EAW durch
- Veränderung des Abzugsverhältnisses
- Einsatz von Folienrandführungen
- Anblasen der Folienabzugslinie

FIG. 10

Schrumpfsteuerung — 60

ΔS Berechnung — 61

Temperatursteuerung LKW — 65

Temperaturführung Abzug / Kühlung — 64

AW 4 – 11, AB 8 – 11, KW 12 – 18 — 68

Geschwindigkeitssteuerung Abzug — 63

AW 4 – 11 — 67

Friktionssteuerung LKW / EAW — 62

Geschwindigkeitssteuerung LKW / EAW — 66

Nachschaltung synchron — 69

58

59